# EUROPEAN PATENT SPECIFICATION

(11) **EP 4 396 289 B1**
(45) Date of publication and mention of the grant of the patent: **25.02.2026**
(21) Application number: 21955390.6
(22) Date of filing: 31.08.2021
(51) Int. Cl.: C08L 83/04, C09K 3/16, C08G 77/20, C09D 183/04

(54) **ANTI-STATIC SILICONE RELEASE COATINGS AND METHODS FOR THEIR PREPARATION AND USE**
ANTISTATISCHE SILIKONTRENNSCHICHTEN UND VERFAHREN ZU DEREN HERSTELLUNG UND VERWENDUNG
REVÊTEMENTS ANTI-STATIQUES ET ANTIADHÉSIFS À BASE DE SILICONE ET LEURS PROCÉDÉS DE PRÉPARATION ET D'UTILISATION

(43) Date of publication of application: 10.07.2024
(73) Proprietor: Dow Silicones Corporation, Midland, MI 48686-0994 (US)
(72) Inventor: FANG, Xin, Shenzhen, Guangdong 518052 (CN); HUANG, Fuming, Shanghai 201203 (CN); ZHU, Jiayin, Shanghai 201203 (CN); LIU, Zhihua, Shanghai 201203 (CN)
(74) Representative: Murgitroyd & Company
(86) International application number: PCT/CN2021/115592
(87) International publication number: WO 2023/028819

(56) References cited:
- EP-A1- 0 309 557
- EP-B1- 3 580 292
- JP-A- 2004 059 813
- KR-A- 20120 040 998
- US-A- 5 708 070
- US-A1- 2008 242 743
- US-A1- 2018 355 116
- US-A1- 2019 245 243
- US-A1- 2020 048 508
- US-A1- 2020 048 508
- US-B1- 6 656 975

## Description

### FIELD

A silicone release coating dispersion can be dried and cured to form a silicone release coating with anti-static properties. Methods for preparation and use of the silicone release coating dispersion are provided.

### INTRODUCTION

Static charges generated during the delamination of adhesives from release liners must be dissipated to protect the adhesive films from electrical discharge and dust adsorption. The incumbent anti-static solution in the silicone pressure sensitive industry requires additional coating of anti-static primers on one or both sides of plastic substrates such as polyethylene terephthalate (PET). This method for fabricating a release liner may suffer from the drawbacks of multiple process steps, which can increase cost and limit productivity; and the anti-static primers may interfere with the curing reaction of the silicone release coating composition or compromise interfacial anchorage of the silicone release coating.

US2020/048508A1 discloses a release liner composition based on hydrosilylation-curing polysiloxane components including a hydrosilylation catalyst, a dispersing agent and an antistatic agent selected from an alkali metal salt and an ionic liquid exemplified by dimethyldi-n-decylammonium tetrafluoroborate, diisopropylethylammonium bis(trifluoromethanesulfonyl)imide and lithium bis(trifluoromethanesulfonyl)imide.

### SUMMARY

A silicone release coating dispersion comprises a continuous phase comprising a hydrosilylation reaction curable silicone release coating composition, a surfactant, and an aqueous discontinuous phase dispersed in the continuous phase. The aqueous phase comprises (A) an ionic liquid and (B) water.

The silicone release coating dispersion may be formed by a method comprising: (1) dissolving (A) the ionic liquid in (B) the water to form an aqueous solution; (2) dispersing the aqueous solution in a siloxane intermediate composition comprising (C) a branched polyorganosiloxane polymer and (D) a silicone polyether, thereby forming a dispersion intermediate; and (3) combining the dispersion intermediate and additional starting materials, where the additional starting materials comprise: (E) a polydiorganosiloxane having at least two aliphatically unsaturated groups per molecule, (F) a polyorganohydrogensiloxane having at least three silicon bonded hydrogen atoms per molecule, and (G) a hydrosilylation reaction catalyst.

A release liner may be prepared using the dispersion described above by a method comprising: optionally (I) treating a surface of a backing substrate, (II) coating the silicone release coating dispersion on the surface of the backing substrate, (III) drying the silicone release coating dispersion to form a film, and (IV) curing the film to form a silicone release coating on the surface of the backing substrate.

### BRIEF DESCRIPTION OF THE DRAWINGS

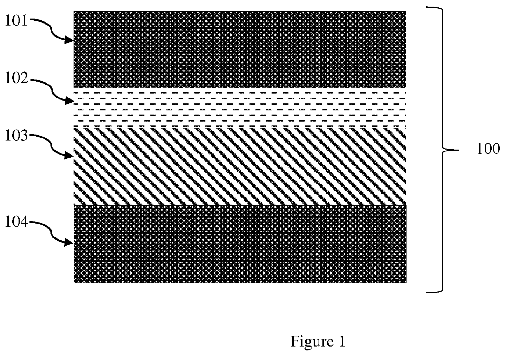

Figure 1 shows a partial cross section of a laminate article (100) including a silicone release coating with anti-static properties (102).

### Reference Numerals

- 101: PET film substrate
- 102: anti-static silicone release coating
- 103: adhesive
- 104: second PET film substrate

### DETAILED DESCRIPTION

The silicone release coating dispersion (dispersion), introduced above, comprises:
(I) the continuous phase comprising the hydrosilylation reaction curable silicone release coating composition (composition),
(II) the surfactant, and
(III) the aqueous discontinuous phase dispersed in the continuous phase, where the aqueous discontinuous phase comprises
   (A) the ionic liquid, and
   (B) water,
where the ionic liquid is dissolved in the water.

### (A) Ionic Liquid

Starting material (A), the ionic liquid, is an anti-static additive that imparts anti-static properties to the silicone release coating prepared from the dispersion. Ionic liquids suitable for use herein are salts, which may comprise a large cation and a charge-delocalized anion. The ionic liquid comprises a water soluble alkali metal salt, such as a lithium salt. The ionic liquid may be one alkali metal salt or a combination of two or more alkali metal salts. Examples of alkali metal salts include metal salts comprising a cation selected from a lithium ion, a sodium ion, and a potassium ion; and an anion selected from a chloride ion, a bromide ion, an iodide ion, a tetrachloroaluminum ion, a hexafluorophosphate ion, a tetrafluoroborate ion, a thiocyanate ion, a perchlorate ion, a p-toluene sulfonate ion, a trifluoromethanesulfonate ion, a pentafluoroethanesulfonate ion, a bis(trifluoromethanesulfonyl)imide, a dicyanamide ion, a tris(trifluoromethylsulfonyl)methide ion, an acetate ion, a trifluoroacetate ion, and a hexafluoroantimony ion. Alternatively, the alkali metal salt may be a lithium salt. The lithium salt may be, for example, (A1) lithium trifluoromethanesulfonate LiSO₃CF₃, (A2) lithium bis(trifluoromethylsulfonyl)imide LiN(SO₂CF₃)₂, LiSO₃C₄F₉, LiC(SO₂CF₃)₃, (A3) LiBF₄, (A4) LiClO₄, (A5) LiPF₆, (A6) LiAsF₆, (A7) LiSbF₆, and (A8) LiB(C₆H₅)₄. These lithium salts may be used either alone, or in combinations of two or more of (A1) to (A8). Alternatively, the ionic liquid may comprise a mixture of (A1) lithium trifluoromethanesulfonate and (A2) lithium bis(trifluoromethylsulfonyl)imide. Lithium salts, such as lithium trifluoromethanesulfonate and lithium bis(trifluoromethylsulfonyl)imide, are commercially available, e.g., from Monils Chemical Engineering Science & Technology (Shanghai) Co., Ltd. The (A1) lithium trifluoromethanesulfonate and (A2) lithium bis(trifluoromethylsulfonyl)imide may be present in amounts such that (A) the ionic liquid comprises 90 weight %, based on combined weights of (A1) and (A2), of (A1) lithium trifluoromethylsulfonate, and 10 weight %, based on combined weights of (A1) and (A2). Starting material (A), the ionic liquid, and starting material (B), the water, may be present in a weight ratio (A):(B) of 2:1 to 1:2 in the aqueous discontinuous phase.

### (B) Water

The water (B) is not generally limited, and may be utilized neat (i.e., absent any carrier vehicles/solvents), and/or pure (i.e., free from or substantially free from minerals and/or other impurities). For example, the water (B) may be processed or unprocessed prior to dissolving (A) the ionic liquid therein. Examples of processes that may be used for purifying the water include distilling, filtering, deionizing, and combinations of two or more thereof, such that (B) the water may be deionized, distilled, and/or filtered. Alternatively, (B) the water may be unprocessed (e.g. may be tap water, i.e., provided by a municipal water system or well water, used without further purification). Alternatively, (B) the water may be purified before dissolving (A) the ionic liquid therein. Alternatively, (B) the water may be utilized as a mixture (e.g. solution or suspension) comprising a carrier vehicle/solvent, such as any of those described below that can be used in the silicone release coating composition.

### Silicone Release Coating Composition

The hydrosilylation reaction curable silicone release coating composition comprises: (C) a branched polyorganosiloxane polymer, (E) a polydiorganosiloxane having at least two aliphatically unsaturated groups per molecule, (F) a polyorganohydrogensiloxane having at least three silicon bonded hydrogen atoms per molecule, and (G) a hydrosilylation reaction catalyst. The silicone release coating composition may optionally further comprise one or more additional starting materials. The one or more additional starting materials may be selected from the group consisting of (H) a solvent; (I) a hydrosilylation reaction inhibitor; and (J) an anchorage additive.

### (C) Branched Polyorganosiloxane Polymer

Starting material (C) is a branched polyorganosiloxane polymer. The branched polyorganosiloxane polymer may have unit formula (C1): (R¹₃SiO_{1/2})ₐ(R¹₂R²SiO_{1/2})_{b}(R¹R²SiO_{2/2})_{c}(R¹₂SiO_{2/2})_{d}(SiO_{4/2}), where each R¹ is an independently selected monovalent hydrocarbon group free of aliphatic unsaturation, each R² is an independently selected aliphatically unsaturated monovalent hydrocarbon group; subscripts a and b represent average numbers of monofunctional units and subscripts c and represent average numbers of difunctional units, per molecule, where a, b, c, and d have average values such that 2 ≥ a ≥ 0, 4 ≥ b ≥ 0, (a + b) = 4, 4 ≥ c ≥ 0, 995 ≥ d ≥ 4, and (a + b + c + d) has a value sufficient to impart a viscosity > 170 mPa·s measured by rotational viscometry at room temperature to the branched polyorganosiloxane polymer. Alternatively, viscosity may be > 170 mPa·s to 1000 mPa·s, alternatively > 170 to 500 mPa·s, alternatively 180 mPa·s to 450 mPa·s, and alternatively 190 mPa·s to 420 mPa·s. Viscosity may be measured at RT at 0.1 rpm to 50 rpm on a Brookfield DV-III cone & plate viscometer with #CP-52 spindle. One skilled in the art would recognize that as viscosity increases, rotation rate decreases. Suitable branched polyorganosiloxane polymers are known in the art and can be made by known methods, exemplified by those disclosed in U.S. Patent 6,806,339 to Cray, et al. and U.S. Patent Publication 2007/0289495 to Cray, et al.

Suitable alkyl groups for R¹ may be linear, branched, cyclic, or combinations of two or more thereof. The alkyl groups are exemplified by methyl, ethyl, propyl (including n-propyl and/or isopropyl), butyl (including n-butyl, tert-butyl, sec-butyl, and/or isobutyl); pentyl, hexyl, heptyl, octyl, decyl, dodecyl, undecyl, and octadecyl (and branched isomers having 5 to 18 carbon atoms), and the alkyl groups are further exemplified by cycloalkyl groups such as cyclopropyl, cyclobutyl, cyclopentyl, and cyclohexyl. Alternatively, the alkyl group for R¹ may be selected from the group consisting of methyl, ethyl, propyl and butyl; alternatively methyl, ethyl, and propyl; alternatively methyl and ethyl. Alternatively, the alkyl group for R¹ may be methyl.

Suitable aryl groups for R¹ may be monocyclic or polycyclic and may have pendant hydrocarbyl groups. For example, the aryl groups for R¹ include phenyl, tolyl, xylyl, and naphthyl and further include aralkyl groups such as benzyl, 1-phenylethyl and 2-phenylethyl. Alternatively, the aryl group for R¹ may be monocyclic, such as phenyl, tolyl, or benzyl; alternatively the aryl group for R¹ may be phenyl.

In the formulas above and below, R² may be an alkenyl group. Suitable alkenyl groups may have terminal alkenyl functionality to facilitate hydrosilylation reaction, *e.g.,* R² may have formula 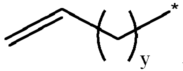 where subscript y is 0 to 6 and * denotes a point of attachment (*i.e.,* to a silicon atom). Alternatively, each R² may be independently selected from the group consisting of vinyl, allyl, and hexenyl. Alternatively, each R² may be independently selected from the group consisting of vinyl and allyl. Alternatively, each R² may be vinyl. Alternatively, each R² may be allyl.

Alternatively, (C) the branched polyorganosiloxane polymer may comprise formula (C2): [R²R¹Si-(O-SiR¹₂)ₓ-O]_{(4-w)}-Si-[O-(R¹₂SiO)ᵥSiR¹₃]_{w}, where R¹ and R² are as described above; and subscripts v, w, and x have values such that 200 ≥ v ≥ 1, 2 ≥ w ≥ 0, and 200 ≥ x ≥ 1. Alternatively, in this formula (C2), each R¹ may be independently selected from the group consisting of methyl and phenyl, and each R² may be independently selected from the group consisting of vinyl, allyl, and hexenyl. Branched polyorganosiloxane suitable for starting material (C2) may be prepared by known methods such as heating a mixture comprising a polyorganosilicate resin, and a cyclic polydiorganosiloxane or a linear polydiorganosiloxane, in the presence of a catalyst, such as an acid or phosphazene base, and thereafter neutralizing the catalyst.

Alternatively, the branched polyorganosiloxane polymer for starting material (C) may comprise a silsesquioxane of unit formula (C3):
(R¹₃SiO_{1/2})ₐₐ(R²R¹₂SiO_{1/2})_{bb}(R¹₂SiO_{2/2})_{cc}(R²R¹SiO_{2/2})ₑₑ(R¹SiO_{3/2})_{dd}, where R¹ and R² are as described above, subscript aa ≥ 0, subscript bb > 0, subscript cc is 15 to 995, subscript dd > 0, and subscript ee ≥ 0. Subscript aa may be 0 to 10. Alternatively, subscript aa may have a value such that: 12 ≥ aa ≥ 0; alternatively 10 ≥ aa ≥ 0; alternatively 7 ≥ aa ≥ 0; alternatively 5 ≥ aa ≥ 0; and alternatively 3 ≥ aa ≥ 0. Alternatively, subscript bb ≥ 1. Alternatively, subscript bb ≥ 3. Alternatively, subscript bb may have a value such that: 12 ≥ bb > 0; alternatively 12 ≥ bb ≥ 3; alternatively 10 ≥ bb > 0; alternatively 7 ≥ bb > 1; alternatively 5 ≥ bb ≥ 2; and
alternatively 7 ≥ bb ≥ 3. Alternatively, subscript cc may have a value such that: 800 ≥ cc ≥ 15; and alternatively 400 ≥ cc ≥ 15. Alternatively, subscript ee may have a value such that: 800 ≥ ee ≥ 0; 800 ≥ ee ≥ 15; and alternatively 400 ≥ ee ≥ 15. Alternatively, subscript ee may b 0. Alternatively, a quantity (cc + ee) may have a value such that 995 ≥ (cc + ee) ≥ 15. Alternatively, subscript dd ≥ 1. Alternatively, subscript dd may be 1 to 10. Alternatively, subscript dd may have a value such that: 10 ≥ dd > 0; alternatively 5 ≥ dd > 0; and
alternatively dd = 1. Alternatively, subscript dd may be 1 to 10, alternatively subscript dd may be 1 or 2. Alternatively, when subscript dd = 1, then subscript bb may be 3 and
subscript cc may be 0. The values for subscript bb may be sufficient to provide the silsesquioxane with an alkenyl content of 0.1% to 1%, alternatively 0.2% to 0.6%, based on the weight of the silsesquioxane. Suitable silsesquioxanes for starting material (C3) are exemplified by those disclosed in U.S. Patent 4,374,967 to Brown, et al; U.S. 6,001,943 to Enami, et al.; U.S. Patent 8,546,508 to Nabeta, et al.; and U.S. Patent 10,155,852 to Enami.

### (E) Aliphatically Unsaturated Polydiorganosiloxane

Starting material (E) in the silicone release coating composition is a polydiorganosiloxane having at least two aliphatically unsaturated groups per molecule. The polydiorganosiloxane may have unit formula (E1): (R²R¹₂SiO_{1/2})₂(R¹₂SiO_{2/2})ⱼ, where R¹ and R² are as described above, subscript j represents average number of difunctional units per molecule, and 10,000 ≥ j ≥ 100.

Starting material (E) may comprise an alkenyl-functional polydiorganosiloxane such as (E1-1) bis-dimethylvinylsiloxy-terminated polydimethylsiloxane, (E1-2) bis-dimethylvinylsiloxy-terminated poly(dimethylsiloxane/methylphenylsiloxane), (E1-3) bis-dimethylvinylsiloxy-terminated poly(dimethylsiloxane/diphenylsiloxane), (E1-4) bisphenyl,methyl,vinyl-siloxy-terminated polydimethylsiloxane, (E1-5) bis-dimethylhexenylsiloxy-terminated polydimethylsiloxane, (E1-6) bis-dimethylhexenyl-siloxy-terminated poly(dimethylsiloxane/methylphenylsiloxane), (E1-7) dimethylhexenyl-siloxy-terminated poly(dimethylsiloxane/diphenylsiloxane), and (E1-8) a combination of two or more of (E1-1) to (E1-7). Alternatively, starting material (E) may be selected from the group consisting of (E1-1) bis-dimethylvinylsiloxy-terminated polydimethylsiloxane, (E1-5) bis-dimethylhexenylsiloxy-terminated polydimethylsiloxane, or both.

Methods of preparing polydiorganosiloxanes as described above for starting material (E), such as hydrolysis and condensation of the corresponding organohalosilanes and oligomers or equilibration of cyclic polydiorganosiloxanes, are known in the art, see for example U.S. Patents 3,284,406; 4,772,515; 5,169,920; 5,317,072; and 6,956,087, which disclose preparing linear polydiorganosiloxanes with alkenyl groups. Examples of linear polydiorganosiloxanes having alkenyl groups are commercially available from, *e.g.,* Gelest Inc. of Morrisville, Pennsylvania, USA under the tradenames DMS-V00, DMS-V03, DMS-V05, DMS-V21, DMS-V22, DMS-V25, DMS-V-31, DMS-V33, DMS-V34, DMS-V35, DMS-V41, DMS-V42, DMS-V43, DMS-V46, DMS-V51, DMS-V52. Other linear polydiorganosiloxanes having alkenyl groups are commercially available from DSC.

Starting material (C) the branched polyorganosiloxane polymer and starting material (E) the polydiorganosiloxane having at least two aliphatically unsaturated groups per molecule are present in amounts that combined total 100 weight parts of the silicone release coating composition. Alternatively, the amount of starting material (C) may be 2 weight parts to 10 weight parts, alternatively 3 weight parts to 9 weight parts of the silicone release coating composition. Alternatively, the amount of starting material (E) may be 20 weight parts to 40 weight parts of the silicone release coating composition.

### (F) Polyorganohydrogensiloxane

Starting material (F) in the silicone release coating composition is a polyorganohydrogensiloxane, which may function as a crosslinker to cure the silicone release coating composition. The polyorganohydrogensiloxane has at least three silicon bonded hydrogen atoms per molecule. The polyorganohydrogensiloxane may have unit formula (F1): (R¹₂HSiO_{1/2})ₖ(R¹₃SiO_{1/2})ₘ(R¹HSiO_{2/2})ₙ(R¹₂SiO_{2/2})ₒ, where R¹ is as described above, subscripts k and m represent average numbers of monofunctional units per molecule, subscripts n and o represent average number of difunctional units per molecule, and subscripts k, m, n, and o have values such that 2 ≥ k ≥ 0, 2 ≥ m ≥ 0, (k + m) = 2, n > 0, o ≥ 0, (k + n) ≥ 3, and 8 ≤ (k + m + n + o) ≤ 400.

Suitable polyorganohydrogensiloxanes for use herein are exemplified by:
(i) α,ω-dimethylhydrogensiloxy-terminated poly(dimethylsiloxane/methylhydrogensiloxane),
(ii) α,ω-dimethylhydrogensiloxy-terminated polymethylhydrogensiloxane,
(iii) α,ω-trimethylsiloxy-terminated poly(dimethylsiloxane/methylhydrogensiloxane),
(iv) α,ω-trimethylsiloxy-terminated polymethylhydrogensiloxane,
(v) α-dimethylhydrogensiloxy-ω-trimethylsiloxy-terminated poly(dimethylsiloxane/methylhydrogensiloxane),
(vi) α-dimethylhydrogensiloxy-ω-trimethylsiloxy-terminated polymethylhydrogensiloxane,
(vii) a combination of two or more thereof. Alternatively, (F) the polyorganohydrogensiloxane may be selected from the group consisting of (iii) α,ω-trimethylsiloxy-terminated poly(dimethylsiloxane/methylhydrogensiloxane), (iv) α,ω-trimethylsiloxy-terminated polymethylhydrogensiloxane, or both.

Polyorganohydrogensiloxanes are also commercially available, such as those available from Gelest, Inc. of Morrisville, Pennsylvania, USA, for example, HMS-H271, HMS-071, HMS-993; HMS-301 and HMS-301 R, HMS-031, HMS-991, HMS-992, HMS-993, HMS-082, HMS-151, HMS-013, HMS-053, HAM-301, HPM-502, and HMS-HM271. Methods of preparing linear and branched polyorganohydrogensiloxanes suitable for use herein, such as hydrolysis and condensation of organohalosilanes, are well known in the art, as exemplified in: U.S. Patent 2,823,218 to Speier, U.S. Patent 3,957,713 to Jeram et al., and U.S. Patent 4,329,273 to Hardman, et al.

The silicon-bonded hydrogen (Si-H) content of polyorganohydrogensiloxanes can be determined using quantitative infra-red analysis in accordance with ASTM E168. The silicon-bonded hydrogen to aliphatically unsaturated groups (e.g., alkenyl such as vinyl and/or alkynyl) ratio is important when relying on a hydrosilylation cure process. Generally, this is determined by calculating the total weight % of aliphatically unsaturated groups in the composition, e.g. vinyl [V] and the total weight % of silicon bonded hydrogen [H] in the composition and given the molecular weight of hydrogen is 1 and of vinyl is 27 the molar ratio of silicon bonded hydrogen to vinyl is 27[H]/[V]. The polyorganohydrogensiloxane is present in an amount sufficient to provide a molar ratio of silicon bonded hydrogen atoms to aliphatically unsaturated groups (SiH:Vi ratio) in the silicone release coating composition of >1:1 to 5:1.

### (G) Hydrosilylation Reaction Catalyst

Starting material (G) in the silicone release coating composition is a hydrosilylation reaction catalyst. This catalyst will promote a reaction between the aliphatically unsaturated groups in starting materials (C) and (E), and the silicon bonded hydrogen atoms in starting material (F). Said catalyst comprises a platinum group metal. The platinum group metal may be selected from the group consisting of platinum, rhodium, ruthenium, palladium, osmium, and iridium. Alternatively, the platinum group metal may be platinum.

For example, (G) the hydrosilylation reaction catalyst may be (G1) the platinum group metal, described above; (G2) a compound of such a metal, for example, chloridotris(triphenylphosphane)rhodium(I) (Wilkinson's Catalyst), a rhodium diphosphine chelate such as [1,2-bis(diphenylphosphino)ethane]dichlorodirhodium or [1,2-bis(diethylphospino)ethane]dichlorodirhodium, chloroplatinic acid (Speier's Catalyst), chloroplatinic acid hexahydrate, platinum dichloride, (G3) a complex of a compound, (G2), with an aliphatically unsaturated organopolysiloxane, or (G4) a platinum group metal compound microencapsulated in a matrix or coreshell type structure. Complexes of platinum with aliphatically unsaturated organopolysiloxanes include 1,3-diethenyl-1,1,3,3-tetramethyldisiloxane complexes with platinum (Karstedt's Catalyst) and Pt(0) complex in tetramethyltetravinylcyclotetrasiloxane (Ashby's Catalyst). Alternatively, the hydrosilylation reaction catalyst may be (G5) a compound or complex, as described above, microencapsulated in a resin matrix. Specific examples of suitable platinum-containing catalysts include chloroplatinic acid, either in hexahydrate form or anhydrous form, or a platinum-containing catalyst which is obtained by a method comprising reacting chloroplatinic acid with an aliphatically unsaturated organosilicon compound such as with a vinyl functional polydimethylsiloxane (e.g., divinyltetramethyldisiloxane), or alkene-platinum-silyl complexes as described in U.S. Patent 6,605,734 to Roy. These alkene-platinum-silyl complexes may be prepared, for example by mixing 0.015 mole (COD)PtCl₂ with 0.045 mole COD and 0.0612 moles HMeSiCl₂, where COD represents cyclooctadienyl and Me represents methyl. Other exemplary hydrosilylation reaction catalysts are described in U.S. Patents 2,823,218 to Speier; 3,159,601 to Ashby; 3,220,972 to Lamoreaux; 3,296,291 to Chalk, et al.; 3,419,593 to Willing; 3,516,946 to Modic; 3,715,334 to Karstedt; 3,814,730 to Karstedt; 3,928,629 to Chandra; 3,989,668 to Lee, et al.; 4,766,176 to Lee, et al.; 4,784,879 to Lee, et al.; 5,017,654 to Togashi; 5,036,117 to Chung, et al.; and 5,175,325 to Brown; and EP 0 347 895 A to Togashi, et al. Suitable hydrosilylation reaction catalysts for starting material (G) are commercially available, for example, SYL-OFF^{™} 4000 Catalyst and SYL-OFF^{™} 2700 are available from Dow Silicones Corporation of Midland, Michigan, USA.

Starting material (G) may be one hydrosilylation reaction catalyst or a combination of two or more of the hydrosilylation reaction catalysts described above. The amount of (G) the hydrosilylation reaction catalyst in the composition will depend on various factors including the selection of starting materials (C), (E), and (F), their respective contents of alkenyl groups and silicon bonded hydrogen atoms, and the amount of (I) hydrosilylation reaction inhibitor present in the silicone release coating composition, however, the amount of catalyst is sufficient to catalyze hydrosilylation reaction of SiH and alkenyl groups, alternatively the amount of catalyst is sufficient to provide at least 0.01 ppm, alternatively at least 0.05 ppm, alternatively at least 0.1 ppm, alternatively at least 0.5 ppm, alternatively at least 1 ppm, and alternatively at least 170 ppm by weight of the platinum group metal based on weight of the silicone release coating dispersion. At the same time, the amount of catalyst is sufficient to provide up to 800 ppm, alternatively up to 500 ppm, and alternatively up to 200 ppm by mass of the platinum group metal, on the same basis.

### (H) Solvent

The continuous phase of the silicone release coating dispersion may optionally further comprise a solvent. The solvent may be added during preparation of the silicone release coating composition to facilitate flow of the composition and introduction of certain starting materials, such as the hydrosilylation reaction catalyst. Solvents that can be used herein are those that help fluidize the starting materials of the silicone release coating composition but essentially do not react with the starting materials. The solvent may be selected based on solubility the starting materials and volatility of the solvent. The solubility refers to the solvent being sufficient to dissolve and/or disperse a starting material. Volatility refers to vapor pressure of the solvent. If the solvent is too volatile (having too high vapor pressure) bubbles may form during hydrosilylation reaction, and the bubbles may cause cracks or otherwise weaken or detrimentally affect properties of the reaction product. However, if the solvent is not volatile enough (too low vapor pressure) the solvent may remain as a plasticizer in the silicone release coating prepared by curing the silicone release coating composition.

Suitable solvents include polyorganosiloxanes with suitable vapor pressures, such as hexamethyldisiloxane, octamethyltrisiloxane, hexamethylcyclotrisiloxane and other low molecular weight polyorganosiloxanes, such as 0.5 to 1.5 cSt DOWSIL^{™} 200 Fluids and DOWSIL^{™} OS FLUIDS, which are commercially available from DSC.

Alternatively, the solvent may comprise an organic solvent. The organic solvent can be an aromatic hydrocarbon such as benzene, toluene, ethylbenzene or xylene; an aliphatic hydrocarbon such as heptane, hexane, or octane; or a halogenated hydrocarbon such as dichloromethane, 1,1,1-trichloroethane or methylene chloride. Alternatively, the solvent may be selected from the group consisting of benzene, toluene, xylene, ethyl benzene, heptane, and a combination of two or more thereof.

The amount of solvent will depend on various factors including the type of solvent selected and the amount and type of other starting materials selected for the silicone release coating composition. However, the amount of solvent may range from 1 % to 99%, alternatively 2 % to 90 %, based on the weight of all starting materials in the silicone release coating composition. Solvent can be added during preparation of the composition, for example, to aid mixing and delivery. All or a portion of the solvent may optionally be removed after the composition is prepared. Alternatively, the continuous phase of the silicone release coating dispersion may comprise up to 90 weight % of the solvent, with a balance to 100 weight % of the continuous phase being the silicone release coating composition.

### (I) Inhibitor

Starting material (I) is a hydrosilylation reaction inhibitor (inhibitor) that may be used for altering the hydrosilylation reaction, as compared to a composition containing the same starting materials but with the inhibitor omitted. Starting material (I) may be selected from the group consisting of (I1) an acetylenic alcohol, (I2) a silylated acetylenic alcohol, (I3) an ene-yne compound, (I4) a triazole, (I5) a phosphine, (I6) a mercaptan, (I7) a hydrazine, (I8) an amine, (I9) a fumarate, (I10) a maleate, (I11) an ether, (I12) carbon monoxide, (I13) an alkenyl-functional siloxane oligomer, and (I14) a combination of two or more thereof. Alternatively, the hydrosilylation reaction inhibitor may be selected from the group consisting of (I1) an acetylenic alcohol, (I2) a silylated acetylenic alcohol, (I9) a fumarate, (I10) a maleate, (I13) carbon monoxide, (I14) a combination of two or more thereof. Alternatively, the inhibitor may comprise an acetylenic alcohol.

Acetylenic alcohols are exemplified by 3,5-dimethyl-1-hexyn-3-ol, 1-butyn-3-ol, 1-propyn-3-ol, methyl butynyls such as 2-methyl-3-butyn-2-ol and 3-methyl-1-butyn-3-ol, 3-methyl-1-pentyn-3-ol, 3-phenyl-1-butyn-3-ol, 4-ethyl-1-octyn-3-ol, 3,5-dimethyl-1-hexyn-3-ol, and ethynyl cyclohexanols such as 1-ethynyl-1-cyclohexanol, and a combination thereof. Acetylenic alcohols are known in the art and are commercially available from various sources, see for example, U.S. Patent 3,445,420 to Kookootsedes et al. Alternatively, the inhibitor may be a silylated acetylenic compound. Without wishing to be bound by theory, it is thought that adding a silylated acetylenic compound reduces yellowing of the reaction product prepared from hydrosilylation reaction as compared to a reaction product from hydrosilylation of starting materials that do not include a silylated acetylenic compound or that include an organic acetylenic alcohol inhibitor, such as those described above. The silylated acetylenic compound is exemplified by (3-methyl-1-butyn-3-oxy)trimethylsilane, ((1,1-dimethyl-2-propynyl)oxy)trimethylsilane, bis(3-methyl-1-butyn-3-oxy)dimethylsilane, bis(3-methyl-1-butyn-3-oxy)silanemethylvinylsilane, bis((1,1-dimethyl-2-propynyl)oxy)dimethylsilane, methyl(tris(1,1-dimethyl-2-propynyloxy))silane, methyl(tris(3-methyl-1-butyn-3-oxy))silane, (3-methyl-1-butyn-3-oxy)dimethylphenylsilane, (3-methyl-1-butyn-3-oxy)dimethylhexenylsilane, (3-methyl-1-butyn-3-oxy)triethylsilane, bis(3-methyl-1-butyn-3-oxy)methyltrifluoropropylsilane, (3,5-dimethyl-1-hexyn-3-oxy)trimethylsilane, (3-phenyl-1-butyn-3-oxy)diphenylmethylsilane, (3-phenyl-1-butyn-3-oxy)dimethylphenylsilane, (3-phenyl-1-butyn-3-oxy)dimethylvinylsilane, (3-phenyl-1-butyn-3-oxy)dimethylhexenylsilane, (cyclohexyl-1-ethyn-1-oxy)dimethylhexenylsilane, (cyclohexyl-1-ethyn-1-oxy)dimethylvinylsilane, (cyclohexyl-1-ethyn-1-oxy)diphenylmethylsilane, (cyclohexyl-1-ethyn-1-oxy)trimethylsilane, and combinations thereof. The silylated acetylenic compound useful as the inhibitor herein may be prepared by methods known in the art, for example, U.S. Patent 6,677,407 to Bilgrien, et al. discloses silylating an acetylenic alcohol described above by reacting it with a chlorosilane in the presence of an acid receptor.

Alternatively, the inhibitor may be an ene-yne compound such as 3-methyl-3-penten-1-yne, 3,5-dimethyl-3-hexen-1-yne; and a combination thereof. Alternatively, the inhibitor may comprise a triazole, exemplified by benzotriazole. Alternatively, the inhibitor may comprise a phosphine. Alternatively, the inhibitor may comprise a mercaptan. Alternatively, the inhibitor may comprise a hydrazine. Alternatively, the inhibitor may comprise an amine. Amines are exemplified by tetramethyl ethylenediamine, 3-dimethylamino-1-propyne, n-methylpropargylamine, propargylamine, 1-ethynylcyclohexylamine, or a combination thereof. Alternatively, the inhibitor may comprise a fumarate. Fumarates include dialkyl fumarates such as diethyl fumarate, dialkenyl fumarates such as diallyl fumarate, and dialkoxyalkyl fumarates such as bis-(methoxymethyl)ethyl fumarate. Alternatively, the inhibitor may comprise a maleate. Maleates include dialkyl maleates such as diethyl maleate, dialkenyl maleates such as diallyl maleate, and dialkoxyalkyl maleates such as bis-(methoxymethyl)ethyl maleate. Alternatively, the inhibitor may comprise an ether.

Alternatively, the inhibitor may comprise carbon monoxide. Alternatively, the inhibitor may comprise an alkenyl-functional siloxane oligomer, which may be cyclic or linear such as methylvinylcyclosiloxanes exemplified by 1,3,5,7-tetramethyl-1,3,5,7-tetravinylcyclotetrasiloxane, 1,3,5,7-tetramethyl-1,3,5,7-tetrahexenylcyclotetrasiloxane, 1,3-divinyl-1,3-diphenyl-1,3-dimethyldisiloxane; 1,3-divinyl-1,1,3,3-tetramethyldisiloxane; and a combination of two or more thereof. The compounds useful as inhibitors described above are commercially available, e.g., from Sigma-Aldrich Inc. or Gelest, Inc., and are known in the art, for example, see U.S. Patent 3,989,667 to Lee, et al. Suitable inhibitors for use herein are exemplified by those described as stabilizer E in U.S. Patent Application Publication 2007/0099007 at paragraphs [0148] to [0165].

The amount of inhibitor will depend on various factors including the desired pot life, the particular inhibitor used, and the selection and amount of catalyst. However, when present, the amount of inhibitor may be 0 % to 1 %, alternatively 0% to 5%, alternatively 0.001 % to 1 %, alternatively 0.01 % to 0.5 %, and alternatively 0.0025 % to 0.025 %, based on the weight of all starting materials in the silicone release coating composition.

### (J) Anchorage Additive

Starting material (J) is an optional anchorage additive. Without wishing to be bound by theory, it is thought that the anchorage additive will facilitate bonding to a backing substrate by a silicone release coating prepared from the silicone release coating dispersion described herein.

Suitable anchorage additives include silane coupling agents such as methyltrimethoxysilane, vinyltrimethoxysilane, allyltrimethoxysilane, 3-methacryloxypropyltrimethoxysilane, 3-aminopropyltrimethoxysilane, N-(2-aminoethyl)-3-aminopropyltrimethoxysilane, bis(trimethoxysilyl)propane, and bis(trimethoxysilylhexane; and mixtures or reaction mixtures of said silane coupling agents. Alternatively, the anchorage additive may be tetramethoxysilane, tetraethoxysilane, dimethyldimethoxysilane, methylphenyldimethoxysilane, methylphenyldiethoxysilane, phenyltrimethoxysilane, methyltrimethoxysilane, methyltriethoxysilane, vinyltriethoxysilane, allyltriethoxysilane, 3-glycidoxypropyltrimethoxysilane, 3-glycidoxypropyltriethoxysilane, or 3-methacryloxypropyl trimethoxysilane.

Exemplary anchorage additives are known in the art, such as in U.S. Patent Publication 2012/0328863 at paragraph [0091] and U.S. Patent Publication 2017/0233612 at paragraph [0041]. Anchorage additives are commercially available. For example, SYL-OFF^{™} 297, SYL-OFF^{™} SL 9176, and SYL-OFF^{™} SL 9250 are available from DSC. Other exemplary anchorage additives include (J-1) vinyltriacetoxysilane, (J-2) glycidoxypropyltrimethoxysilane, and (J-3) a combination of (J-1) and (J-2). This combination (J-3) may be a mixture and/or a reaction product.

The amount of anchorage additive depends on various factors including the type of substrate to which the composition will be applied. However, the amount of anchorage additive may be 1% to 5%, alternatively 1% to 3%, and alternatively 1.9% to 2.1%, based on combined weights of all starting materials in the composition.

### (II) Surfactant

The silicone release coating dispersion described above further comprises (II) a surfactant. The surfactant is capable of forming a dispersion of the aqueous discontinuous phase comprising the ionic liquid and water, described above, in the continuous phase comprising the silicone release coating composition, also described above. The surfactant comprise (D) a silicone polyether.

The silicone polyether has unit formula (D1): (R¹₃SiO_{1/2})₂(R¹₂SiO_{2/2})ₑ(R¹R³SiO_{2/2})_{f}, where R¹ is as described above, each R³ is an independently selected polyether group, subscript e is 1 to 500, alternatively 1 to 200, alternatively 1 to 50, alternatively 40 to 50, and alternatively 10 to 45; and subscript f is 1 to 1000, alternatively 1 to 300, alternatively 1 to 40, alternatively 1 to 5, and alternatively 2 to 5. R³, the polyether group, has formula - (D¹)_{g}O(D²O)ₕR⁴, where each D¹ is an independently selected divalent hydrocarbon group of 2 to 4 carbon atoms, each D² is an independently selected divalent hydrocarbon group of 2 to 4 carbon atoms, R⁴ is selected from the group consisting of H or an alkyl group of 1 to 10 carbon atoms, subscript g is 1 to 20, alternatively 1 to 3, and subscript h is 1 to 50, alternatively 4 to 50, and alternatively 8 to 40. Alternatively, D¹ may have formula CₚH₂ₚ, where subscript p is 3 to 12, alternatively 3 to 6. Alternatively, each D² may be selected from the group consisting of C₂H₄ and C₃H₆. Alternatively, R⁴ may be H. Suitable (D) silicone polyethers are known in the art and may be made by known methods, such as those disclosed in U.S. Patent 8,877,886 to Souda, et al. Suitable silicone polyethers for starting material (D) are commercially available, for example, DOWSIL^{™} ES-5612 is commercially available from DSC.

Starting material (II), the surfactant may optionally further comprise a cosurfactant. The cosurfactant may be a second silicone polyether that differs from (D1) in at least one respect, an organic polyether, or a combination thereof.

The second silicone polyether may have unit formula (D2): formula (R¹₃SiO_{1/2})₂(R¹₂SiO_{2/2})_{e'}(R¹R⁵SiO_{2/2})_{f'}, where R¹ and R² are as described above, subscript e' and subscript f' represent average numbers of difunctional units per molecule and have values such that e is 0 to 500, alternatively 0 to 200, alternatively 0 to 50, and alternatively 0 to 45, with the proviso that e' < e; and subscript f' is 1 to 1000, alternatively 1 to 300, alternatively 1 to 40, alternatively 1 to 5, and alternatively 1 to 2. R⁵ has formula - (D¹)_{g}O(D³O)ᵢH, where each D³ is an independently selected divalent hydrocarbon group of 2 to 4 carbon atoms, subscript g is 1 to 20, alternatively 1 to 3, and subscript i is 1 to 50. Alternatively, each D³ may be selected from the group consisting of C₂H₄ and C₃H₆. Alternatively, subscript i may be 1 to 10, and alternatively 5 to 10. Alternatively, in unit formula (D2), subscript e' may be 0, and subscript f' may be 1. Silicone polyethers of formula (D2) are commercially available, for example, XIAMETER^{™} OFX-5211 is commercially available from DSC.

Alternatively, the silicone polyether cosurfactant may have a rake type structure wherein the polyoxyethylene or polyoxyethylene-polyoxypropylene copolymeric units are grafted onto the siloxane backbone, or the silicone polyether can have an ABA block copolymeric structure wherein A represents the polyether portion and B the siloxane portion of an ABA structure. Alternatively, the SPE may have a resinous structure, such as a polyorganosilicate resin having polyether groups bonded to silicon atoms therein. Suitable SPE's include DOWSIL^{™} OFX-5329 Fluid from DSC. Other silicone polyether surfactants are known in the art and are also commercially available, e.g., DOWSIL^{™} 502W and DOWSIL^{™} 67 Additive are commercially available from DSC.

Alternatively, the cosurfactant may comprise an organic polyether. Suitable organic polyethers are known in the art and are commercially available. For example, suitable organic polyethers include DOWFAX^{™} nonionic surfactants, e.g., linear EO/PO block copolymers, such as the DOWFAX^{™} N series, available from TDCC.

The amount of (II) the surfactant in the silicone release coating dispersion depends on various factors including the selection and amounts of (C) the branched polyorganosiloxane polymer and (E) the polydiorganosiloxane having at least two aliphatically unsaturated groups per molecule, however, the amount of (II) the surfactant may be 0.1 weight parts to 5 weight parts, based on combined weights of starting materials (C) and (E). Alternatively, the amount of (D1) the silicone polyether may be 0.1 weight parts to 5 weight parts, based on combined weights of starting materials (C) and (E). Alternatively, when the cosurfactant is present, the amount of (D1) the silicone polyether may be 0.1 weight parts to < 5 weight parts, based on combined weights of starting materials (C) and (E).

Other optional starting materials may be present in the silicone release coating dispersion, including, for example, reactive diluents, fragrances, preservatives, colorants, dyes, pigments, anti-oxidants, heat stabilizers, flame retardants, flow control additives, biocides, fillers (including extending and reinforcing fillers), surfactants, thixotroping agents, and pH buffers. The composition may be in any form and may be incorporated into further compositions. Alternatively, the silicone release coating dispersion may be free of particulates or contains only a limited amount of particulate (e.g., filler and/or pigment), such as 0 to 30% by weight of the dispersion. Without wishing to be bound by theory, it is thought that particulates can agglomerate or otherwise stick to the coater equipment used to form the silicone release coating. In addition, particulates can hinder optical properties, for example transparency, of the silicone release coating and of the release liner formed therewith, if optical transparency is desired, and/or the particulates may be prejudicial to the adherence of an adherend.

The silicone release coating dispersion may be free from fluoroorganosilicone compounds. It is believed that, during the cure, a fluorocompound, because of its low surface tension, may rapidly migrate to the interface of the dispersion or the silicone release coating formed therewith and a substrate on which the dispersion is applied and the silicone release coating is formed, for example a dispersion/PET film interface. Such migration may detrimentally affect anchorage of the silicone release coating (prepared by curing) to the substrate by making a fluorine containing barrier. By making a barrier, the fluoroorganosilicone compounds may prevent any starting material of the silicone release coating dispersion from reacting at the interface, impacting curing and/or anti-static properties. Moreover, fluoroorganosilicone compounds are usually expensive.

### Method for Forming the Silicone Release Coating Dispersion

The silicone release coating dispersion described above may be prepared by a method comprising:
(1) dissolving (A) the ionic liquid in (B) the water to form an aqueous solution;
(2) dispersing the aqueous solution in a siloxane intermediate composition comprising
   (C) the branched polyorganosiloxane polymer, and
   (D) the silicone polyether, thereby forming a dispersion intermediate; and
(3) combining the dispersion intermediate and additional starting materials, where the additional starting materials comprise
   (E) the polydiorganosiloxane having at least two aliphatically unsaturated groups per molecule,
   (F) the polyorganohydrogensiloxane having at least three silicon bonded hydrogen atoms per molecule,
   (G) the hydrosilylation reaction catalyst,
   optionally (H) the solvent,
   optionally (I) the hydrosilylation reaction inhibitor, and
   optionally (J) the anchorage additive.
Without wishing to be bound by theory, it is thought that the order of addition described above, in which the dispersion intermediate is prepared in step (2), facilitates preparation of a stable dispersion, and that combining the anti-static additive with the silicone release coating composition would form a composition that does not cure to form a silicone release coating with the desired resistance, as shown below in Comparative Example 4.

Step (1) may be performed by any convenient means, such as mixing at RT or elevated temperature, in batch, semi-batch, or continuous equipment. Mixing in step (1) may occur, for example using, batch mixing equipment with medium/low shear such as change-can mixers, double-planetary mixers, conical-screw mixers, ribbon blenders, double-arm or sigma-blade mixers. Alternatively, batch equipment with high-shear and/or high-speed dispersers can be used in step (1), step (2), and/or step (3), and these include equipment such as that made by Charles Ross & Sons (NY), Hockmeyer Equipment Corp. (NJ); batch mixing equipment such as those sold under the tradename Speedmixer^{™}; and batch equipment with high shear actions include Banbury-type (CW Brabender Instruments Inc., NJ) and Henschel type (Henschel mixers America, TX). Illustrative examples of continuous mixers/compounders include extruders single-screw, twin-screw, and multi-screw extruders, co-rotating extruders, such as those manufactured by Krupp Werner & Pfleiderer Corp (Ramsey, NJ), and Leistritz (NJ); extruders such as twin-screw counter-rotating extruders, two-stage extruders, twin-rotor continuous mixers, dynamic or static mixers or combinations of these equipment. Steps (2) and (3) may also be performed at RT.

### Method for Preparing a Release Liner

The silicone release coating dispersion prepared as described above may be used to prepare a release liner. The release liner may be prepared by a method comprising:
optionally (I) treating a surface of a backing substrate,
(II) coating the silicone release coating dispersion as described above on the surface of the backing substrate,
(III) drying the silicone release coating dispersion to form a film, and
(IV) curing the film to form a silicone release coating on the surface of the backing substrate.

In step (I), the backing substrate (substrate) is not limited. The substrate may comprise a plastic, which maybe a thermosetting and/or thermoplastic. However, the substrate may alternatively be or comprise glass, metal, cellulose (e.g. paper), cardboard, paperboard, a polymeric material, or a combination thereof. Specific examples of suitable substrates include paper substrates such as Kraft paper, polyethylene coated Kraft paper (PEK coated paper), thermal paper, and regular papers; polymeric substrates such polyamides (PA); polyesters such as polyethylene terephthalates (PET), polybutylene terephthalates (PET), polytrimethylene terephthalates (PTT), polyethylene naphthalates (PEN), and liquid crystalline polyesters; polyolefins such as polyethylenes (PE), polypropylenes (PP), and polybutylenes; styrenic resins; polyoxymethylenes (POM); polycarbonates (PC); polymethylenemethacrylates (PMMA); polyvinyl chlorides (PVC); polyphenylene sulfides (PPS); polyphenylene ethers (PPE); polyimides (PI); polyamideimides (PAI); polyetherimides (PEI); polysulfones (PSU); polyethersulfones; polyketones (PK); polyetherketones; polyvinyl alcohols (PVA); polyetheretherketones (PEEK); polyetherketoneketones (PEKK); polyarylates (PAR); polyethernitriles (PEN); phenolic resins; phenoxy resins; celluloses such as triacetylcellulose, diacetylcellulose, and cellophane; fluorinated resins, such as polytetrafluoroethylenes; thermoplastic elastomers, such as polystyrene types, polyolefin types, polyurethane types, polyester types, polyamide types, polybutadiene types, polyisoprene types, and fluoro types; and copolymers, and combinations thereof.

In step (I), treating the surface of the substrate before applying the release coating dispersion may be performed by any convenient means such as a plasma treatment or a corona discharge treatment. Alternatively, the substrate may be treated by applying a primer. Step (I) is optional and may be absent.

The silicone release coating dispersion can, for example, be applied to the substrate by any convenient means such as spraying, doctor blade, dipping, screen printing or by a roll coater, *e.g.* an offset web coater, kiss coater or etched cylinder coater.

In step (II), the silicone release coating dispersion can be applied to any substrate, such as those described above. Alternatively, the silicone release coating composition may be applied to polymer film substrates, for example polyester, particularly polyethylene terephthalate (PET), polyethylene, polypropylene, polyester, or polystyrene films. The silicone release coating dispersion can alternatively be applied to a paper substrate, including plastic coated paper, for example paper coated with polyethylene, glassine, super calender paper, or clay coated kraft. The release coating composition can alternatively be applied to a metal foil substrate, for example aluminum foil.

Step (III) may be performed by any conventional means, such as heating at 50° C to 100 °C for a time sufficient to remove all or a portion of (B) the water, and when present, (H) the solvent. The method may further comprise curing the silicone release coating composition to form the silicone release coating on the surface of the substrate. Curing may be performed by any conventional means such as heating at 100 °C to 200 °C.

Under production coater conditions, cure can be effected in a residence time of 1 second to 6 seconds, alternatively 1.5 seconds to 3 seconds, at an air temperature of 120 °C to 150 °C. Heating can be performed in an oven, *e.g.,* an air circulation oven or tunnel furnace or by passing the coated substrate around heated cylinders.

Figure 1 shows a partial cross section of a laminate article (100) that can be made as described above. The laminate article (100) has a release liner comprised of a PET film backing substrate (101) having an anti-static silicone release coating (102) on a surface of the backing substrate (101). An adhesive (103) on a surface of a second PET film substrate (104) is protected by the release liner, where the surface of the anti-static silicone release coating (102) contacts a surface of the adhesive (103).

### EXAMPLES

The following examples are presented to illustrate the invention to one skilled in the art and are not to be construed to limit the scope of the invention set forth in the claims. Starting materials used in these examples are described in Table 1.

**Table 1 - Starting Materials**

| Starting Materials | Commercial Product Name | Product Description |
|---|---|---|
| Polymer Mixture | SYL-OFF^{™} 7226 | 30 % vinyl-functional polydimethylsiloxane + 0.2 % methyl butynol + 0.65 % methylhydrogen siloxane, trimethylsiloxy-terminated + 69.15 % toluene |
| Branched polyorganosiloxane Polymer (C-1) | DOWSIL^{™} 2-7757 | Q-branched polymer, M^{vi}₄D^{vi}_{1.8}D₁₆₈Q |
| Anti-static additive 1 | Lithium Salts | Mixture of 90 % of lithium trifluoromethylsulfonate (LiTFS) and 10 wt% of lithium bis(trifluoromethylsulfonyl)imide (LiTFSI). |
| Anti-static additive 2 | [BMIM]⁺[TFSI]⁻ | 1-Butyl-3-methylimidazolium Bis(trifluoromethanesulfonyl)imide |
| Anti-static addditive 3 | [MeBu₃N]⁺[TFSI]⁻ | Tributylmethylammonium Bis(trifluoromethanesulfonyl)imide |
| Surfactant (SPE1) | DOWSIL^{™} ES-5612 | MD₄₅D₂^{R}M, where R is -(CH₂)₃O(CH₂CH₂O)₁₀H |
| Surfactant (SPE2) | XIAMETER^{™} OFX-5211 | M₂D^{R}, where R is -(CH₂)₃O(CH₂CH₂O)_{7.8}H |
| Anchorage Additive | SYL-OFF^{™} 297 | 50 % glycidoxypropyltrimethoxysilane, 50 % vinyltriacetoxysilane |
| SiH crosslinker (F-1) | SYL-OFF^{™} 7028 | Methylhydrogen Siloxane, trimethylsiloxy-terminated |
| Solvent (H-1) | Toluene | |
| Catalyst (G-1) | SYL-OFF^{™} 4000 | Platinum catalyst with alkenyl functional polydimethylsiloxanes |

Starting materials branded DOWSIL^{™} , SYL-OFF^{™} , and XIAMETER^{™} are commercially available from DSC. The Lithium Salts were purchased from Monils Chemical Engineering Science & Technology (Shanghai) Co., Ltd. The toluene was obtained from Sinopharm Chemical Reagent Co. LTD. Anti-static Additives 2 and 3 were also purchased from Monils Chemical Engineering Science & Technology (Shanghai) Co., Ltd.

In this Reference Example 1, silicone release coating dispersions were prepared as follows:
(1) An aqueous solution was prepared by dissolving an anti-static additive in water with vigorous agitation.
(2) DOWSIL^{™} 2-7757 and DOWSIL^{™} ES-5612 were mixed by a SpeedMixer (3500 rpm, 60 s) to form a siloxane intermediate composition.
(3) The aqueous solution was progressively (for example, in a sequence of 2 g, 2 g, 2 g, 3 g, 3 g, 3 g, 3 g) blended into the siloxane intermediate composition by a SpeedMixer (3500 rpm, 60 s). The resulting dispersion intermediate was obtained in the form of white cream with an anti-static additive content of up 40%. To make a dispersion intermediate with less anti-static additive, the concentration of anti-static additive in the discontinuous (internal) phase could be reduced accordingly.
(4) The resulting dispersion intermediate was mixed with SYL-OFF^{™} 7226 by a SpeedMixer (3500 rpm, 60 s). The mixture was diluted with toluene to obtain a composition with 90% toluene. The SYL-OFF^{™} 297 anchorage additive and SYL-OFF^{™} 4000 catalyst were added and mixed (3500 rpm, 60 s) sequentially to form the silicone release coating dispersion. Amounts of each starting material used are shown below in Tables 2 and 3.

In this Reference Example 2, the silicone release coating dispersions prepared according to Reference Example 1 were coated on a PET film ((210 cm × 297 cm, 50 µm, corona-treated) with a Mayer rod (#6) at a speed of 10 cm s⁻¹, which corresponded to a coating weight of 0.6-0.8 g m⁻². The resulting films were then dried and cured by heating at 140 °C for 30 s and then cooled to room temperature, thereby forming release liners comprising silicone release coatings on the surface of the PET films.

In this Reference Example 3, surface resistance of each silicone release coating prepared as described in Reference Example 2 was measured by a digital surface resistance metre (TECMAN, TM385, measuring range: 10³-10¹² Ω sq⁻¹, accuracy: ± 10%) at room temperature (20-25 °C). The measurement of surface resistance was performed in triplicate, at three different places on each silicone release coating. The coating weight (CW), i.e., the areal density of the silicone release coating, was determined by an X-Ray fluorescence spectrometer (XRF, Oxford Lab-X Supreme8000) with a bare PET film as the reference. The silicone release coatings were aged for either 7 days or 30 days before testing.

In this Reference Example 4, release force at room temperature (RF-RT) was evaluated using the 180 degree peeling test to measure release force from the release liner. A Tesa 7475 standard tape was laminated on a (cured) silicone release coating, a loaded weight of 20g/cm² was placed on the laminated sample and left under RT (room temperature of 25°C) for 20 hours. After 20 hours, the loaded weight was removed, and the sample was allowed to rest for 30 minutes. The release force was then tested by a ChemInstruments AR-1500 using FINAT Test Method No.10 (FINAT Technical Handbook 7th edition, 2005).

Release force after aging at 70 °C (RF-70 °C aging) was evaluated using the 180 degree peeling test to measure release force from the release liner. A Tesa 7475 standard tape was laminated on a (cured) silicone release coating, a loaded weight of 20g/cm² was placed on the laminated sample and left under 70 °C for 20 hours. After 20 hours, the loaded weight was removed and the sample allowed to rest for 30 minutes. Release force was then tested by ChemInstruments AR-1500 using FINAT Test Method No.10 (FINAT Technical Handbook 7th edition, 2005).

Coat weight was evaluated as described above in Reference Example 3, and thereafter an Abrasion Tester (Elcometer 1720) was used to rub each sample 30 cycles at a speed of 30 cycles/minute. The coat weight after Rub off was evaluated as described above again to measure the relative anchorage performance. Anchorage was calculated as (CW after Rub-off)/(CW before Rub-off)×100%.

**Table 2 - Comparative Examples**

| Product Name | Unit | CE1 | CE2 | CE3 | CE4 | CE5 |
|---|---|---|---|---|---|---|
| Vinyl-functional polydimethylsiloxane gum from the Polymer Mixture 7226 | g | 30 | 30 | 30 | 30 | 30 |
| Toluene from the Polymer Mixture 7226 | g | 69.15 | 69.15 | 69.15 | 69.15 | 69.15 |
| Methyl Butynol from the Polymer Mixture 7226 | g | 0.2 | 0.2 | 0.2 | 0.2 | 0.2 |
| Trimethylsiloxy-terminated polymethylhydrogensiloxane from Polymer Mixture 7226 | g | 0.65 | 0.65 | 0.65 | 0.65 | 0.65 |
| DOWSIL^{™} 2-7757 | g | 0 | 0 | 0 | 0 | 6 |
| Water | g | 0 | 0 | 0 | 0 | 3 |
| Anti-static additives, Lithium salts | g | 0 | 0 | 0 | 3 | 0 |
| [BMIM][TFSI] | g | 0 | 10 | 0 | 0 | 0 |
| [MeBu₃N][TFSI] | g | 0 | 0 | 10 | 0 | 0 |
| DOWSIL^{™} ES-5612 | g | 0 | 0 | 0 | 0 | 0.7 |
| XIAMETER^{™} OFX-5211 | g | 0 | 0 | 0 | 0 | 0 |
| SYL-OFF^{™} 297 | g | 0.3 | 0.3 | 0.3 | 0.3 | 0.3 |
| SYL-OFF^{™} 7028 | g | 0 | 0 | 0 | 0 | 0.2 |
| Toluene | % | 90 | 90 | 90 | 90 | 90 |
| Catalyst | ppm Pt | 170 | 170 | 170 | 170 | 170 |
| SiH/Vi | | 1.4 | 1.4 | 1.4 | 1.4 | 1.4 |
| Total solids content | % | 10 | 10 | 10 | 10 | 10 |
| Anti-static content | % | 0 | 33 | 33 | 10 | 20 |
| Water content | % | 0 | 0 | 0 | 0 | 10 |
| Coating weight | g/m² | 0.7 | 0.7 | 0.7 | 0.7 | 0.7 |
| Surface Resistance (7 d) | Ω sq⁻¹ | >10¹² | >10¹² | >10¹² | >10¹² | >10¹² |
| Surface Resistance (30 d) | Ω sq⁻¹ | >10¹² | >10¹² | >10¹² | >10¹² | >10¹² |
| RT/RF | g/in | 14.6 | 24.1 | 28.6 | 17.3 | 16.5 |
| 70 °C aged RF | g/in | 18.5 | 24.8 | 27.3 | 22.5 | 20.9 |
| Anchorage | % | 90 | 23 | 26 | 89 | 64 |

**Table 3 - Working Examples**

| Product Name | Unit | IE1 | IE2 | IE3 | IE4 | IE5 | IE6 | IE7 |
|---|---|---|---|---|---|---|---|---|
| Vinyl-functional polydimethylsiloxane gum from the Polymer Mixture 7226 | g | 30 | 30 | 30 | 30 | 30 | 30 | 30 |
| Toluene from the Polymer Mixture 7226 | g | 69.15 | 69.15 | 69.15 | 69.15 | 69.15 | 69.15 | 69.15 |
| Methyl Butynol from the Polymer Mixture 7226 | g | 0.2 | 0.2 | 0.2 | 0.2 | 0.2 | 0.2 | 0.2 |
| Trimethylsiloxy-terminated polymethylhydrogensiloxane from Polymer Mixture 7226 | g | 0.65 | 0.65 | 0.65 | 0.65 | 0.65 | 0.65 | 0.65 |
| DOWSIL^{™} 2-7757 | g | 3 | 6 | 9 | 6 | 6 | 6 | 3 |
| Water | g | 1.5 | 3 | 4.5 | 3 | 6 | 6 | 3 |
| Anti-static additives, Lithium salts | g | 3 | 6 | 9 | 6 | 3 | 3 | 1.5 |
| [BMIM][TFSI] | g | 0 | 0 | 0 | 0 | 0 | 0 | 0 |
| [MeBu₃N][TFSI] | g | 0 | 0 | 0 | 0 | 0 | 0 | 0 |
| DOWSIL^{™} ES-5612 | g | 0.35 | 0.7 | 1.05 | 0.7 | 0.7 | 0.7 | 0.35 |
| XIAMETER^{™} OFX-5211 | g | 0 | 0 | 0 | 1.5 | 0 | 0.6 | 0 |
| SYL-OFF^{™} 297 | g | 0.3 | 0.3 | 0.3 | 0.3 | 0.3 | 0.3 | 0.3 |
| SYL-OFF^{™} 7028 | g | 0.2 | 0.2 | 0.2 | 0.2 | 0.2 | 0.2 | 0.2 |
| Toluene | % | 90 | 90 | 90 | 90 | 90 | 90 | 90 |
| Catalyst | ppm Pt | 170 | 170 | 170 | 170 | 170 | 170 | 170 |
| SiH/Vi | | 1.4 | 1.4 | 1.4 | 1.4 | 1.4 | 1.4 | 1.4 |
| Total solids content | % | 10 | 10 | 10 | 10 | 10 | 10 | 10 |
| Anti-static content | % | 10 | 20 | 30 | 20 | 10 | 10 | 5 |
| Water content | % | 5 | 10 | 15 | 10 | 20 | 20 | 10 |
| Coating weight | g/m² | 0.7 | 0.7 | 0.7 | 0.7 | 0.7 | 0.7 | 0.7 |
| Surface Resistance (7 d) | Ω sq⁻¹ | 10¹⁰-10¹² | 10⁹ | 10⁹ | 10¹⁰-10¹¹ | 10⁹ | 10⁸ | 10⁹ |
| Surface Resistance (30 d) | Ω sq⁻¹ | 10⁹-10¹⁰ | 10⁹ | 10⁸ | 10¹⁰-10¹¹ | 10⁹ | 10⁸ | 10⁹ |
| RT/RF | g/in | 18.2 | 21.3 | 23.3 | 20.8 | 18.8 | 18.5 | 17.6 |
| 70 °C aged RF | g/inch | 22.6 | 22.7 | 24.1 | 21.2 | 25.1 | 24.3 | 23.4 |
| Anchorage | % | 59 | 51 | 29 | 45 | 76 | 72 | 88 |

Comparative Examples 1 and 5 (CE1, CE5) showed that silicone release coatings prepared from silicone release coating compositions without an anti-static additive were insulating under the conditions tested, and thus unable to dissipate static charges, as shown by the Surface Resistance values > 10¹² Ω sq⁻¹ in Table 2.

Comparative Examples 2 and 3 (CE2, CE3) showed that conventional anti-static additives ([BMIM][TFSI]) and ([MeBu₃N][TFSI]) did not provide sufficient anti-static effects to a silicone release coating prepared from silicone release coating compositions containing these conventional anti-static additives. Under the conditions tested, the Surface Resistance values for both CE1 and CE2 were > 10¹² Ω sq⁻¹ as shown in Table 2. Without wishing to be bound by theory, it is thought that the poor anti-static effects were due to immiscibility of the conventional anti-static additives in silicone release coating compositions.

Comparative Example 4 (CE4) was prepared according to the method described in U.S. Patent Application Publication 2020/0048508A1, in which a lithium salt was directly blended into the silicone release coating composition. The resulting silicone release coating had poor resistance values, showing that the silicone release coating dispersion prepared as described herein (in the working examples) had superior performance under the conditions tested.

Working Examples 1 and 2 (IE1, IE2) contained 10% and 20%, respectively, of anti-static additive 1 and showed surface resistance decreased by several orders of magnitude after the films being left at room temperature for several days.

Working Example 3 (IE3) contained 30% of anti-static additive 1 and exhibited a surface resistance of 10⁸ Ω sq⁻¹ after 30 d. The large quantity of anti-static additive 1 may impact the appearance of the silicone release coating, thus making this silicone release coating composition more suitable for use in applications not requiring a transparent silicone release coating.

Working Example 4 (IE4) showed that adding surfactant XIAMETER^{™} OFX-5211 into the silicone release coating composition of IE2 still provided a silicone release coating with surface resistance ≤ 10¹¹ Ω sq⁻¹, which was less than that in all of the comparative examples in Table 2.

IE5, IE6, IE7: The fraction of anti-static additive 1 in the water-in-silicone emulsion was reduced to 20% by decreasing concentration of the anti-static additive in the internal phase, compared with IE1-IE4 where the anti-static additive 1 accounted for 40%. of the aqueous phase. The quantity of anti-static additive 1 was reduced by half when the same amount of aqueous phase was combined with the other starting materials. As a result, a surface resistance of 10⁹ Ω sq⁻¹ was recorded with 10% of anti-static additive 1 (IE5, IE6). The addition of cosurfactant (XIAMETER^{™} OFX-5211) did not alter the initial resistance, but did have an impact on the resistance after aging at room temperature, under the conditions tested. The surface resistance decreased to 10⁸ Ω sq⁻¹ from seven days onwards with additional 2% of cosurfactant (IE6). Further reduction the content of anti-static additive 1 diminished the initial conductivity (IE7) under the conditions tested.

### PROBLEMS TO BE ADDRESSED

Ionic liquids, which comprise large ions with bulky substituents, particularly lithium salts, are useful as anti-static agents, but are poorly miscible with non-polar polyorganosiloxanes. Therefore, ionic liquids are prone to separate from polyorganosiloxane matrices, which may lead to structural defects and appearance flaws in silicone release coatings prepared from compositions containing polyorganosiloxane matrices and ionic liquids, such as those disclosed in U.S. Patent Application Publication 2020/0048508A1. In addition, the degree of dissociation and ionic mobility of the ionic liquid are limited in non-polar matrices, which results in limited ionic conductivity. Although lithium salts have been previously used as anti-static additives in silicone release coatings, these may achieve a surface resistance > 10¹² Ω sq⁻¹, which is higher than desired for providing anti-static properties to a silicone release coating for some applications.

### INDUSTRIAL APPLICABILITY

The present silicone release coating dispersion incorporates a water-soluble ionic liquid and a silicone release coating composition. As shown in the examples above, a film formed from the silicone release coating dispersion can be dried and cured to form a silicone release coating with a surface resistance ≤ 10¹¹ Ω sq⁻¹ after 7 to 30 days under the conditions tested. One or more orders of magnitude improvement (i.e. reduction) in surface resistance can be achieved using the silicone release coating dispersion described herein to prepare a silicone release coating.

### DEFINITIONS AND USAGE OF TERMS

All amounts, ratios, and percentages are by weight unless otherwise indicated. The amounts of all starting materials in a composition total 100% by weight. The Summary and the Abstract are hereby incorporated by reference. The articles 'a', 'an', and 'the' each refer to one or more, unless otherwise indicated by the context of specification. The singular includes the plural unless otherwise indicated. The term "comprising" and derivatives thereof, such as "comprise" and "comprises" are used herein in their broadest sense to mean and encompass the notions of "including," "include," "consist(ing) essentially of," and "consist(ing) of. The use of "for example," "e.g.," "such as," and "including" to list illustrative examples does not limit to only the listed examples. Thus, "for example" or "such as" means "for example, but not limited to" or "such as, but not limited to" and encompasses other similar or equivalent examples.

It is to be understood that the appended claims are not limited to express and particular compounds, compositions, or methods described in the detailed description, which may vary between particular embodiments which fall within the scope of the appended claims. With respect to any Markush groups relied upon herein for describing particular features or aspects of various embodiments, different, special, and/or unexpected results may be obtained from each member of the respective Markush group independent from all other Markush members. Each member of a Markush group may be relied upon individually and or in combination and provides adequate support for specific embodiments within the scope of the appended claims.

Abbreviations used herein are defined in Table 4.

**Table 4 - Abbreviations**

| Abbreviation | Definition |
|---|---|
| ° C | Degrees Celsius |
| COD | cyclooctadiene |
| cSt | centistokes |
| D | a difunctional siloxane unit of formula (Me₂SiO_{2/2}) |
| D^{R} | a difunctional siloxane unit of formula (RMeSiO_{2/2}) |
| D^{vi} | a difunctional siloxane unit of formula (ViMeSiO_{2/2}) |
| DSC | Dow Silicones Corporation of Midland, Michigan, USA |
| g | gram |
| in | inch |
| m | meter |
| M | a monofunctional siloxane unit of formula (Me₃SiO_{1/2}) |
| M^{vi} | a monofunctional siloxane unit of formula (ViMe₂SiO_{1/2}) |
| Me | methyl |
| min | minutes |
| mPa·s | milli Pascal seconds |
| Q | a tetrafunctional siloxane unit of formula (SiO_{4/2}) |
| RF | release force |
| RT | room temperature of 25 ± 2 °C |
| s | second |
| SPE | silicone polyether |
| TDCC | The Dow Chemical Company of Midland, Michigan, USA |
| um | micrometer |
| Vi | vinyl |

## Claims

1. A silicone release coating dispersion comprising:
(I) a continuous phase comprising a hydrosilylation reaction curable silicone release coating composition,
(II) a surfactant, and
(III) an aqueous discontinuous phase dispersed in the continuous phase, where the aqueous discontinuous phase comprises
(A) an ionic liquid, and
(B) water,
where the ionic liquid is dissolved in the water.

2. The silicone release coating dispersion of claim 1, where the silicone release coating composition comprises:
(C) a branched polyorganosiloxane polymer of unit formula (R¹₃SiO_{1/2})ₐ(R¹₂R²SiO_{1/2})_{b}(R¹R²SiO_{2/2})_{c}(R¹₂SiO_{2 2})_{d}(SiO_{4/2}), where each R¹ is an independently selected monovalent hydrocarbon group free of aliphatic unsaturation, each R² is an independently selected aliphatically unsaturated monovalent hydrocarbon group; subscripts a and b represent average numbers of monofunctional units and subscripts c and represent average numbers of difunctional units, per molecule, where a, b, c, and d have average values such that 2 ≥ a ≥ 0, 4 ≥ b ≥ 0, (a + b) = 4, 4 ≥ c ≥ 0, 995 ≥ d ≥ 4, and (a + b + c + d) has a value sufficient to impart a viscosity > 170 mPa·s measured by rotational viscometry at room temperature;
(E) a polydiorganosiloxane having at least two aliphatically unsaturated groups per molecule;
where amount of (C) the branched polyorganosiloxane polymer and amount of (E) the polydiorganosiloxane having at least two aliphatically unsaturated groups per molecule combined total 100 weight parts;
(F) a polyorganohydrogensiloxane having at least three silicon bonded hydrogen atoms per molecule in an amount sufficient to provide a molar ratio of silicon bonded hydrogen atoms to aliphatically unsaturated groups (SiH:Vi ratio) in the release coating composition of >1: 1 to 5:1;
(G) a hydrosilylation reaction catalyst sufficient to provide 1 ppm to 500 ppm of a platinum group metal based on weight of silicone the release coating dispersion;
optionally (I) a hydrosilylation reaction inhibitor; and
optionally (J) an anchorage additive.

3. The silicone release coating dispersion of claim 1 or claim 2, where the continuous phase further comprises up to 90 weight % of a solvent, with a balance to 100 weight % of the continuous phase being the silicone release coating composition.

4. The silicone release coating dispersion of claim 2 or claim 3, where (C) the branched polyorganosiloxane polymer has formula: [R²R¹₂Si-(O-SiR¹₂)ₓ-O]_{(4-w)}-Si-[O-(R¹₂SiO)ᵥSiR¹₃]_{w}, where R¹ and R² are as described above; and subscripts v, w, and x have values such that 200 ≥ v ≥ 1, 2 ≥ w ≥ 0, and 200 ≥ x ≥ 1.

5. The silicone release coating dispersion of any one of claims 2 to 4, where (E) the polydiorganosiloxane has unit formula (R²R¹₂SiO_{1/2})₂(R¹₂SiO_{2/2})ⱼ, where R¹ and R² are as described above, subscript j represents average number of difunctional units per molecule, and 10,000 ≥ j ≥ 100.

6. The silicone release coating dispersion of any one of claims 2 to 5, where (F) the polyorganohydrogensiloxane has unit formula (R¹₂HSiO_{1/2})ₖ(R¹₃SiO_{1/2})ₘ(R¹HSiO_{2/2})ₙ(R¹₂SiO_{2/2})ₒ, where R¹ is as described above, subscripts k and m represent average numbers of monofunctional units per molecule, subscripts n and o represent average number of difunctional units per molecule, and subscripts k, m, n, and o have values such that 2 ≥ k ≥ 0, 2 ≥ m ≥ 0, (k + m) = 2, n > 0, o ≥ 0, (k + n) ≥ 3, and 8 ≤ (k + m + n + o) ≤ 400.

7. The silicone release coating dispersion of any one of claims 2 to 6, where each R¹ is independently selected from the group consisting of methyl and phenyl, and each R² is independently selected from the group consisting of vinyl, allyl, and hexenyl.

8. The silicone release coating dispersion of any one of claims 1 to 7, where (II) the surfactant comprises (D) a silicone polyether.

9. The silicone release coating dispersion of claim 8, where (D) the silicone polyether has unit formula (D1): (R¹₃SiO_{1/2})₂(R¹₂SiO_{2/2})ₑ(R¹R³SiO_{2/2})_{f}, where subscript e is 1 to 50, subscript f is 1 to 5, R¹ is as described above, R⁴ is selected from the group consisting of H and an alkyl group, and each R³ is a polyether group of formula -(D¹)_{g}O(D²O)ₕR⁴, where each D¹ is an independently selected divalent hydrocarbon group of 2 to 4 carbon atoms, each D² is an independently selected divalent hydrocarbon group of 2 to 4 carbon atoms, subscript g is 1 to 20, and subscript h is 1 to 50.

10. The silicone release coating dispersion of claim 9, further comprising a cosurfactant, where the cosurfactant has unit formula (D2): (R¹₃SiO₁/₂)₂(R¹₂SiO_{2/2})_{e'}(R¹R⁵SiO_{2/2})_{f'}, where R¹ is as described above, subscript e' is 0 to 50, with the proviso that e' < e, subscript f' is 1 to 5, and R⁵ has formula -(D¹)_{g}O(D³O)ᵢH, where D³ is a divalent hydrocarbon group of 2 to 4 carbon atoms, and subscript i is 1 to 50.

11. The silicone release coating dispersion of any one of claims 1 to 10, where (A) the ionic liquid comprises
90 weight %, based on combined weights of (A1) and (A2), of (A1) lithium trifluoromethylsulfonate, and
10 weight %, based on combined weights of (A1) and (A2), of (A2) lithium bis(trifluoromethylsulfonyl)imide; thereby forming an aqueous solution,
where (A) the ionic liquid and (B) the water are present in a weight ratio (A):(B) of 2:1 to 1:2 in the aqueous discontinuous phase.

12. A method for forming the silicone release coating dispersion of any one of claims 2 to 11, where the method comprises:
(1) dissolving (A) the ionic liquid in (B) the water to form an aqueous solution;
(2) dispersing the aqueous solution in a siloxane intermediate composition comprising
(C) the branched polyorganosiloxane polymer, and
(D) the silicone polyether, thereby forming a dispersion intermediate; and
(3) combining the dispersion intermediate and additional starting materials, where the additional starting materials comprise
(E) the polydiorganosiloxane having at least two aliphatically unsaturated groups per molecule,
(F) the polyorganohydrogensiloxane having at least three silicon bonded hydrogen atoms per molecule,
(G) the hydrosilylation reaction catalyst,
optionally (H) the solvent,
optionally (I) the hydrosilylation reaction inhibitor, and
optionally (J) the anchorage additive.

13. A method for preparing a release liner, where the method comprises:
optionally (I) treating a surface of a substrate,
(II) coating the silicone release coating dispersion of any one of claims 1 to 11 on the surface of the substrate,
(III) drying the silicone release coating dispersion to form a film, and
(IV) curing the film to form a silicone release coating on the surface of the substrate.

14. A release liner prepared by the method of claim 13.

## Patentansprüche

1. Silikontrennbeschichtungsdispersion, umfassend:
(I) eine kontinuierliche Phase, die eine durch eine Hydrosilylierungsreaktion härtbare Silikontrennbeschichtungszusammensetzung umfasst,
(II) ein Tensid, und
(III) eine in der kontinuierlichen Phase dispergierte wässrige diskontinuierliche Phase, wobei die wässrige diskontinuierliche Phase Folgendes umfasst
(A) eine ionische Flüssigkeit, und
(B) Wasser,
wo die ionische Flüssigkeit im Wasser aufgelöst ist.

2. Silikontrennbeschichtungsdispersion nach Anspruch 1, wobei die Silikontrennbeschichtungszusammensetzung Folgendes umfasst:
(C) ein verzweigtes Polyorganosiloxanpolymer der Einheitsformel (R¹₃SiO_{1/2})ₐ(R¹₂R²SiO_{1/2})_{b}(R¹ R²SiO_{2/2})_{c}(R¹₂SiO_{2/2})_{d}(SiO_{4/2}), wobei jedes R¹ eine unabhängig ausgewählte einwertige Kohlenwasserstoffgruppe ohne aliphatische Ungesättigtheit ist, jedes R² eine unabhängig ausgewählte aliphatisch ungesättigte einwertige Kohlenwasserstoffgruppe ist; die tiefgestellten Buchstaben a und b stehen für die durchschnittliche Anzahl monofunktioneller Einheiten und die tiefgestellten Buchstaben c und d für die durchschnittliche Anzahl difunktioneller Einheiten pro Molekül, wobei a, b, c und d solche Durchschnittswerte aufweisen, dass 2 ≥ a ≥ 0, 4 ≥ b ≥ 0, (a + b) = 4, 4 ≥ c ≥ 0, 995 ≥ d ≥ 4 und (a + b + c + d) einen Wert aufweist, der ausreicht, um eine durch Rotationsviskosimetrie bei Raumtemperatur gemessene Viskosität >170 mPa·s zu erreichen;
(E) ein Polydiorganosiloxan, das mindestens zwei aliphatisch ungesättigte Gruppen pro Molekül aufweist;
wobei die Menge an (C) dem verzweigten Polyorganosiloxanpolymer und die Menge an (E) dem Polydiorganosiloxan, das mindestens zwei aliphatisch ungesättigte Gruppen pro Molekül aufweist, zusammen 100 Gewichtsteile betragen;
(F) ein Polyorganohydrogensiloxan mit mindestens drei siliciumgebundenen Wasserstoffatomen pro Molekül in einer Menge, die ausreicht, um ein molares Verhältnis von siliciumgebundenen Wasserstoffatomen zu aliphatisch ungesättigten Gruppen (SiH:Vi-Verhältnis) in der Trennbeschichtungszusammensetzung von >1:1 bis 5:1 bereitzustellen;
(G) einen Hydrosilylierungsreaktionskatalysator, der ausreicht, um 1 ppm bis 500 ppm eines Metalls der Platingruppe, bezogen auf das Gewicht des Silikons, der Trennbeschichtungsdispersion bereitzustellen;
optional (I) einen Inhibitor der Hydrosilylierungsreaktion; und
optional (J) ein Verankerungsadditiv.

3. Silikontrennbeschichtungsdispersion nach Anspruch 1 oder 2, wobei die kontinuierliche Phase ferner bis zu 90 Gew.-% eines Lösungsmittels umfasst und der Rest auf 100 Gew.-% der kontinuierlichen Phase die Silikontrennbeschichtungszusammensetzung ist.

4. Silikontrennbeschichtungsdispersion nach Anspruch 2 oder 3, wobei (C) das verzweigte Polyorganosiloxanpolymer die folgende Formel aufweist: [R²R¹₂Si-(O-SiR¹₂)ₓ-O]_{(4-w)}-Si-[O-(R¹₂SiO)ᵥSiR¹₃]_{w}, wobei R¹ und R² wie oben beschrieben sind; und die Indizes v, w und x solche Werte aufweisen, dass 200 ≥ v ≥ 1, 2 ≥ w ≥ 0, und 200 ≥ x ≥ 1.

5. Silikontrennbeschichtungsdispersion nach einem der Ansprüche 2 bis 4, wobei (E) das Polydiorganosiloxan die Einheitsformel (R²R¹₂SiO_{1/2})₂(R¹₂SiO_{2/2})ⱼ aufweist, wobei R¹ und R² wie oben beschrieben sind, der tiefgestellte Index j die durchschnittliche Anzahl der difunktionellen Einheiten pro Molekül darstellt und 10.000 ≥ j ≥ 100 ist.

6. Silikontrennbeschichtungsdispersion nach einem der Ansprüche 2 bis 5, wobei (F) das Polyorganohydrogensiloxan die folgende Einheitsformel aufweist (R¹₂HSiO_{1/2})ₖ(R¹₃SiO_{1/2})ₘ(R¹HSiO_{2/2})ₙ(R¹₂SiO_{2/2})ₒ, wobei R¹ wie oben beschrieben ist, die Indizes k und m die durchschnittliche Anzahl der monofunktionellen Einheiten pro Molekül, die Indizes n und o die durchschnittliche Anzahl der difunktionellen Einheiten pro Molekül aufweisen und die Indizes k, m, n und o solche Werte aufweisen, dass 2 ≥ k ≥ 0, 2 ≥ m ≥ 0, (k + m) = 2, n ≥ 0, o ≥ 0, (k + n) ≥ 3 und 8 ≤ (k + m + n + o) ≤ 400.

7. Silikontrennbeschichtungsdispersion nach einem der Ansprüche 2 bis 6, wobei jedes R¹ unabhängig voneinander ausgewählt ist aus der Gruppe, bestehend aus Methyl und Phenyl und jedes R² unabhängig voneinander ausgewählt ist aus der Gruppe, bestehend aus Vinyl, Allyl und Hexenyl.

8. Silikontrennbeschichtungsdispersion nach einem der Ansprüche 1 bis 7, wobei (II) das Tensid (D) einen Silikonpolyether umfasst.

9. Silikontrennbeschichtungsdispersion nach Anspruch 8, wobei (D) der Silikonpolyether die Einheitsformel (D1) aufweist:
(R¹₃SiO_{1/2})₂(R¹₂SiO_{2/2})ₑ(R¹R³SiO_{2/2})_{f}, worin der tiefgestellte Index e 1 bis 50 ist, der tiefgestellte Index f 1 bis 5 ist, R¹ wie oben beschrieben ist, R⁴ ausgewählt ist aus der Gruppe, bestehend aus H und einer Alkylgruppe und jedes R³ eine Polyethergruppe der Formel -(D¹)_{g}O(D²O)ₕR⁴ ist, wobei jedes D¹ eine unabhängig ausgewählte divalente Kohlenwasserstoffgruppe mit 2 bis 4 Kohlenstoffatomen ist, jedes D² eine unabhängig ausgewählte divalente Kohlenwasserstoffgruppe mit 2 bis 4 Kohlenstoffatomen ist, der tiefgestellte Index g 1 bis 20 ist und der tiefgestellte Index h 1 bis 50 ist.

10. Silikontrennbeschichtungsdispersion nach Anspruch 9, ferner umfassend ein Co-Tensid, wobei das Co-Tensid die Einheitsformel (D2) aufweist: (R¹₃SiO_{1/2})₂(R¹₂SiO_{2/2})_{e'}(R¹R⁵SiO_{2/2})_{f'}, wobei R¹ wie oben beschrieben ist, der Index e' 0 bis 50 ist, mit der Maßgabe, dass e' < e ist, der Index f' 1 bis 5 ist und R⁵ die Formel -(D¹)_{g}O(D³O)ᵢH aufweist, wobei D³ eine zweiwertige Kohlenwasserstoffgruppe mit 2 bis 4 Kohlenstoffatomen ist und der Index i 1 bis 50 ist.

11. Silikontrennbeschichtungsdispersion nach einem der Ansprüche 1 bis 10, wobei (A) die ionische Flüssigkeit Folgendes umfasst
90 Gew.-%, bezogen auf die Summe der Gewichte von (A1) und (A2), von (A1) Lithiumtrifluormethylsulfonat und
10. Gew.-%, bezogen auf das Gesamtgewicht von (A1) und (A2), von (A2) Lithiumbis(trifluormethylsulfonyl)imid; wodurch sich eine wässrige Lösung bildet,
wobei (A) die ionische Flüssigkeit und (B) das Wasser in einem Gewichtsverhältnis (A):(B) von 2:1 bis 1:2 in der wässrigen diskontinuierlichen Phase vorhanden sind.

12. Verfahren zur Bildung der Silikontrennbeschichtungsdispersion nach einem der Ansprüche 2 bis 11, wobei das Verfahren Folgendes umfasst:
(1) Auflösen von (A) der ionischen Flüssigkeit in (B) dem Wasser zur Bildung einer wässrigen Lösung;
(2) Dispergieren der wässrigen Lösung in einer Siloxan-Zwischenprodukt-Zusammensetzung, umfassend
(C) das verzweigte Polyorganosiloxanpolymer, und
(D) den Silikonpolyether, wodurch ein Dispersionszwischenprodukt gebildet wird; und
(3) Kombinieren des Dispersionszwischenprodukts und zusätzlicher Ausgangsstoffe, wobei die zusätzlichen Ausgangsstoffe Folgendes umfassen
(E) das Polydiorganosiloxan, das mindestens zwei aliphatisch ungesättigte Gruppen pro Molekül aufweist,
(F) das Polyorganohydrogensiloxan mindestens drei siliciumgebundene Wasserstoffatome pro Molekül aufweist,
(G) den Hydrosilylierungsreaktionskatalysator,
optional (H) das Lösungsmittel,
optional (I) den Inhibitor der Hydrosilylierungsreaktion, und
optional (J) den Verankerungszusatz.

13. Verfahren zur Herstellung einer Trennschicht, wobei das Verfahren umfasst:
optional (I) Behandeln einer Oberfläche eines Substrats,
(II) Beschichten der Oberfläche des Substrats mit der Silikontrennbeschichtungsdispersion nach einem der Ansprüche 1 bis 11,
(III) Trocknen der Silikontrennbeschichtungsdispersion zur Bildung eines Films, und
(IV) Aushärten des Films zur Bildung einer Silikontrennschicht auf der Oberfläche des Substrats.

14. Trennlage, die durch das Verfahren nach Anspruch 13 hergestellt wird.

## Revendications

1. Dispersion de revêtement antiadhésif en silicone comprenant :
(I) une phase continue comprenant une composition de revêtement antiadhésif en silicone durcissable par réaction d'hydrosilylation,
(II) un agent tensioactif, et
(III) une phase discontinue aqueuse dispersée dans la phase continue, où la phase discontinue aqueuse comprend
(A) un liquide ionique, et
(B) de l'eau,
où le liquide ionique est dissous dans l'eau.

2. Dispersion de revêtement antiadhésif en silicone selon la revendication 1, où la composition de revêtement antiadhésif en silicone comprend :
(C) un polymère polyorganosiloxane ramifié de formule unitaire (R¹₃SiO_{1/2})a(R¹₂R²SiO_{1/2})_{b}(R¹R²SiO_{2/2})c(R¹₂SiO_{2/2})_{d}(SiO_{4/2}), où chaque R¹ est un groupe hydrocarboné monovalent choisi indépendamment exempt d'insaturation aliphatique, chaque R² est un groupe hydrocarboné monovalent à insaturation aliphatique choisi indépendamment ; les indices a et b représentent des nombres moyens de motifs monofonctionnels et les indices c et représentent des nombres moyens de motifs difonctionnels, par molécule, où a, b, c, et d ont des valeurs moyennes telles que 2 ≥ a ≥ 0, 4 ≥ b ≥ 0, (a + b) = 4, 4 ≥ c ≥ 0, 995 ≥ d ≥ 4, et (a + b + c + d) a une valeur suffisante pour conférer une viscosité > 170 mPa·s mesurée par viscosimétrie rotative à température ambiante ;
(E) un polydiorganosiloxane ayant au moins deux groupes à insaturation aliphatique par molécule ;
où la quantité du polymère polyorganosiloxane ramifié (C) et la quantité du polydiorganosiloxane (E) ayant au moins deux groupes à insaturation aliphatique par molécule combinées totalisent 100 parties en poids ;
(F) un polyorganohydrogénosiloxane ayant au moins trois atomes d'hydrogène liés à du silicium par molécule en une quantité suffisante pour fournir un rapport molaire entre atomes d'hydrogène liés à du silicium et groupes à insaturation aliphatique (rapport SiH:Vi) dans la composition de revêtement antiadhésif de > 1:1 à 5:1 ;
(G) un catalyseur réaction d'hydrosilylation suffisant pour fournir 1 ppm à 500 ppm d'un métal du groupe du platine sur la base du poids de la dispersion de revêtement antiadhésif en silicone ;
facultativement (I) un inhibiteur de réaction d'hydrosilylation ; et
facultativement (J) un additif d'ancrage.

3. Dispersion de revêtement antiadhésif en silicone selon la revendication 1 ou la revendication 2, où la phase continue comprend en outre jusqu'à 90 % en poids d'un solvant, un reste jusqu'à 100 % en poids de la phase continue étant la composition de revêtement antiadhésif en silicone.

4. Dispersion de revêtement antiadhésif en silicone selon la revendication 2 ou la revendication 3, où le polymère polyorganosiloxane ramifié (C) a la formule : [R²R¹₂Si-(O-SiR¹₂)ₓ-O]_{(4-w)}-Si-[O-(R¹₂SiO)ᵥSiR¹₃]_{w}, où R¹ et R² sont tels que décrits ci-dessus ; et les indices v, w, et x ont des valeurs telles que 200 ≥ v ≥ 1, 2 ≥ w ≥ 0, et 200 ≥ x ≥ 1.

5. Dispersion de revêtement antiadhésif en silicone selon l'une quelconque des revendications 2 à 4, où le polydiorganosiloxane (E) a la formule unitaire (R²R¹₂SiO_{1/2})₂(R¹₂SiO_{2/2})ⱼ, où R¹ et R² sont tels que décrits ci-dessus, l'indice j représente un nombre moyen de motifs difonctionnels par molécule, et 10 000 ≥ j ≥ 100.

6. Dispersion de revêtement antiadhésif en silicone selon l'une quelconque des revendications 2 à 5, où le polyorganohydrogénosiloxane (F) a la formule unitaire
(R¹₂HSiO_{1/2})ₖ(R¹₃SiO_{1/2})ₘ(R¹HSiO_{2/2})ₙ(R¹₂SiO_{2/2})ₒ, où R¹ est tel que décrit ci-dessus, les indices k et m représentent des nombres moyens de motifs monofonctionnels par molécule, les indices n et o représentent un nombre moyen de motifs difonctionnels par molécule, et les indices k, m, n, et o ont des valeurs telles que 2 ≥ k ≥ 0, 2 ≥ m ≥ 0, (k + m) = 2, n > 0, o ≥ 0, (k + n) ≥ 3, et 8 ≤ (k + m + n + o) ≤ 400.

7. Dispersion de revêtement antiadhésif en silicone selon l'une quelconque des revendications 2 à 6, où chaque R¹ est choisi indépendamment dans le groupe constitué de méthyle et phényle, et chaque R² est choisi indépendamment dans le groupe constitué de vinyle, allyle, et hexényle.

8. Dispersion de revêtement antiadhésif en silicone selon l'une quelconque des revendications 1 à 7, où l'agent tensioactif (II) comprend (D) un polyéther de silicone.

9. Dispersion de revêtement antiadhésif en silicone selon la revendication 8, où le polyéther de silicone (D) a la formule unitaire (D1) :
(R¹₃SiO_{1/2})₂(R¹₂SiO_{2/2})ₑ(R¹R³SiO_{2/2})_{f}, où l'indice e vaut de 1 à 50, l'indice f vaut de 1 à 5, R¹ est tel que décrit ci-dessus, R⁴ est choisi dans le groupe constitué de H et d'un groupe alkyle, et chaque R³ est un groupe polyéther de formule - (D¹)_{g}O(D²O)ₕR⁴, où chaque D¹ est un groupe hydrocarboné divalent choisi indépendamment de 2 à 4 atomes de carbone, chaque D² est un groupe hydrocarboné divalent choisi indépendamment de 2 à 4 atomes de carbone, l'indice g vaut de 1 à 20, et l'indice h vaut de 1 à 50.

10. Dispersion de revêtement antiadhésif en silicone selon la revendication 9, comprenant en outre un co-agent tensioactif, où le co-agent tensioactif a la formule unitaire (D2) : (R¹₃SiO_{1/2})₂(R¹₂SiO_{2/2})_{e'}(R¹R⁵SiO_{2/2})_{f'}, où R¹ est tel que décrit ci-dessus, l'indice e' vaut de 0 à 50, à condition que e' < e, l'indice f' vaut de 1 à 5, et R⁵ a la formule -(D¹)_{g}O(D³O)ᵢH, où D³ est un groupe hydrocarboné divalent de 2 à 4 atomes de carbone, et l'indice i vaut de 1 à 50.

11. Dispersion de revêtement antiadhésif en silicone selon l'une quelconque des revendications 1 à 10, où le liquide ionique (A) comprend
90 % en poids, sur la base des poids combinés de (A1) et (A2), de trifluorométhylsulfonate de lithium (A1), et
10 % en poids, sur la base des poids combinés de (A1) et (A2), de bis(trifluorométhylsulfonyl)imide (A2) ; permettant ainsi de former une solution aqueuse,
où le liquide ionique (A) et l'eau (B) sont présents dans un rapport en poids (A):(B) de 2:1 à 1:2 dans la phase discontinue aqueuse.

12. Procédé permettant de former la dispersion de revêtement antiadhésif en silicone selon l'une quelconque des revendications 2 à 11, où le procédé comprend :
(1) la dissolution du liquide ionique (A) dans l'eau (B) afin de former une solution aqueuse ;
(2) la dispersion de la solution aqueuse dans une composition intermédiaire de siloxane comprenant
(C) le polymère polydiorganosiloxane ramifié, et
(D) le polyéther de silicone, permettant ainsi de former un intermédiaire de dispersion ; et
(3) la combinaison de l'intermédiaire de dispersion et de matières premières supplémentaires, où les matières premières supplémentaires comprennent
(E) le polydiorganosiloxane ayant au moins deux groupes à insaturation aliphatique par molécule,
(F) le polyorganohydrogénosiloxane ayant au moins trois atomes d'hydrogène liés à du silicium par molécule,
(G) le catalyseur de réaction d'hydrosilylation,
facultativement (H) le solvant,
facultativement (1) l'inhibiteur de réaction d'hydrosilylation, et
facultativement (J) l'additif d'ancrage.

13. Procédé permettant de produire une doublure antiadhésive, où le procédé comprend :
facultativement (1) le traitement d'une surface d'un substrat,
(II) le revêtement de la dispersion de revêtement antiadhésif en silicone selon l'une quelconque des revendications 1 à 11 sur la surface du substrat,
(III) le séchage de la dispersion de revêtement antiadhésif en silicone afin de former un film, et
(IV) le durcissement du film afin de former un revêtement antiadhésif en silicone sur la surface du substrat.

14. Doublure antiadhésive préparée par le procédé selon la revendication 13.
